Europäisches Patentamt

European Patent Office

Office européen des brevets

(11) Publication number: **0 246 210**
**A2**

# (12) EUROPEAN PATENT APPLICATION

(21) Application number: **87850134.5**

(22) Date of filing: **23.04.87**

(51) Int. Cl.³: **B 60 P 7/08**

(30) Priority: **13.05.86 SE 8602179**

(43) Date of publication of application:
**19.11.87 Bulletin 87/47**

(84) Designated Contracting States:
**DE FR GB SE**

(71) Applicant: **MIDLAND**
**P.O. Box 214**
**S-871 01 Härnösand(SE)**

(72) Inventor: **Eriksson, Yngve**
**Hemmansvägen 101**
**S-871 00 Härnösand(SE)**

(74) Representative: **Sedvall, Bengt Gustaf et al,**
**B. Sedvall Patentbyra Box 7182**
**S-103 88 Stockholm(SE)**

(54) Device in strap tensioners.

(57) Device in strap tensioners for tightening a strap, e.g. round a load in transport vehicles, ships, etc. The tensioner includes a holder member (10) with a fastening for one end (22) of the strap to be tensioned. The holder member (10) is rotatably mounted on a shaft (14), around which the other end of the strap is reeled for tensioning the strap.

An operating member (12) is also rotatably mounted on the shaft (14) for rotating the shaft relative the holder member (10) in a direction of rotation tensioning the strap.

The shaft (14) is fabricated in two circle sector - shaped halves (36, 38) disposed in spaced relationship to form a slot (32) in which a strap end can be inserted. The two shaft halves (36, 38) are preferably made as hollow sections.

Fig. 1

## Device in Strap Tensioners

The present invention relates to a device in strap tensioners of the type recited in the preamble to the accompanying claim 1.

In such tensioners, one strap is firmly retained in a holder member, which is rotatably mounted about a shaft, the other end of the strap being reeled up on the shaft for tensioning the strap about a load, for example. An operating member is mounted for rotation about the shaft and is also adapted for rotating the latter with the aid of a pawl mechanism engaging in ratchet wheels fixedly mounted on the shaft. The shaft is restrained from rotating in the opposite direction by a stop pawl mechanism disposed on the holder member.

The main object of the invention is to improve and simplify the shaft structure in this type of strap tensioner, the object being achieved by the apparatus in accordance with the invention being given the characterizing features disclosed in the accompanying claims.

The invention will now be described in detail in connection with the accompanying drawing illustraing a preferred embodiment of a strap tensioner executed in accordance with the invention, and on which
Figure 1 is a section through a strap tensioner,
Figure 2 is a perspective view of the operating member and shaft,
Figure 3 is a perspective view of the shaft, and
Figure 4 is a section through the shaft.

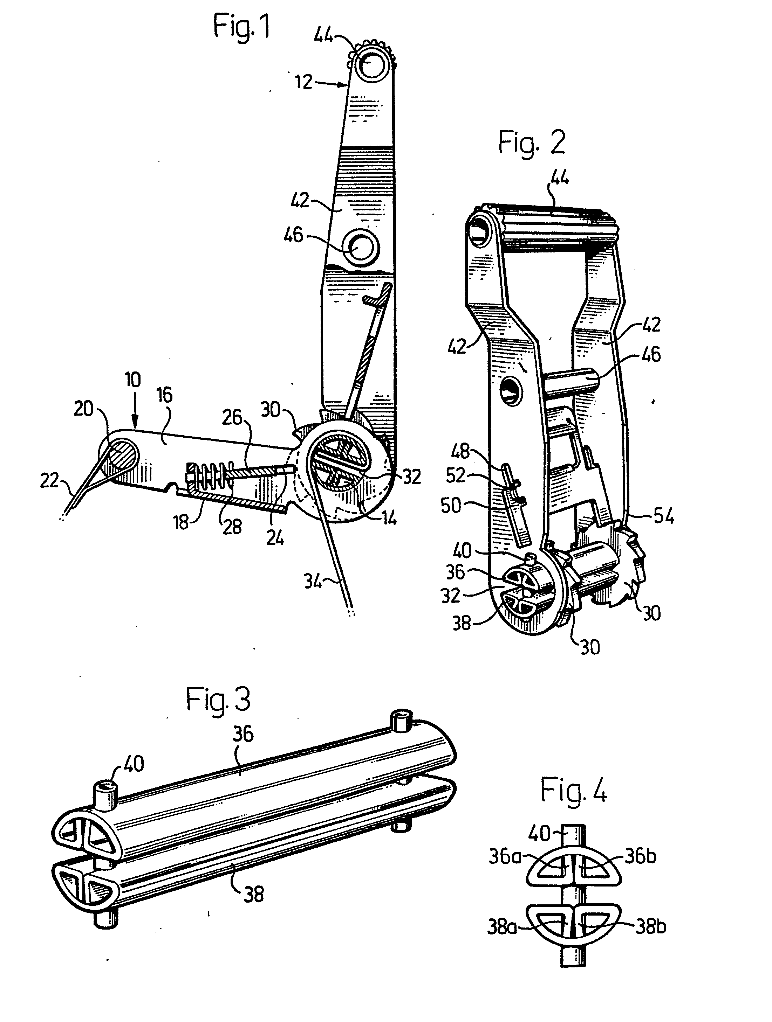

The strap tensioner illustrated in Figure 1 includes a strap holder member 10 and an operating member 12, both mounted for rotation on a common shaft 14. The member 10 includes two cheek plates 16, in mutually spaced, parallel relationship, these plates being united by a bottom plate 18. A shaft 20 is also fixed between the plates 16, to this shaft there being attached an end of the strap 22, which is to be tensioned or stretched. There are slots 24 in the plates 16 for accommodating a stop pawl plate 26, which is biased by a spring 28 towards the shaft 14 such as to cause the stop pawl plate 26 to engage the teeth of ratchet wheel 30, described later, these wheels being mounted on the shaft 14. The cheek plates 16 are also provided with openings, not given denotations, through the shaft 14 passes with clearance such as to enable the holder member 10 to rotate about the shaft.

The operating member 12 includes two cheek plates 42, which are united by a handle 44 riveted thereto at the end of the member remote from the shaft 14. A shaft 46 also keeps the cheek plates together. A pawl plate 50 is accommodated between the cheek plates 42 and in slots 48 in the plates. With the aid of a spring 52 engaging the plate 50 at its centre and in holes in one cheek plate 42, the pawl plate 50 is biased towards the ratchet wheels 30, projecting tongues 54 on the pawl plate 50 engaging against teeth on the ratchet wheels. When the operating member 12 is rotated anti-clockwise in relation to the holder member 10 and shaft 14, the pawl plate 50 will glide over the sloping flanks of the ratchet wheel 30 teeth against the bias of the spring 52, during which movement the shaft is motionless. Clockwise movement of the operating member 12 causes the locking plate 50 to engage the teeth on ratchet wheels 30, giving them, and consequently the shaft 14, rotational movement relative the holder member 10 so that the strap end portion 34 with its end inserted in the shaft slot 32 is tensioned. During this movement the stop pawl plate 26 in the holder member 10 will glide over the ratchet wheel teeth, and when the movement is terminated, this plate will prevent movement of the shaft in the opposite direction caused by tension in the strap.

The shaft 14 comprises two circle sector - shaped halves 36, 38 accommodated in complemental slots in the ratchet wheels 30 at a mutual spacing corresponding to the desired width of the slot (see Figure 2). The shaft 14 is axially restrained by dowel pins 40 or the like disposed exterior to the operating member 12.

In accordance with the invention, the two halves 36, 38 of the shaft 14 are fabricated from elongate plates, which are curved and folded to the desired configuration illustrated in the Figures. Each plate is accordingly folded into a circle sector - shaped hollow section, preferably a semi-circular section 36, 38. The halves are thus given greater strength, to enable them to withstand the large forces exercised by the strap on the shaft, since the longitudinal edge portions 36a, 36b and 38a 38b have been folded inwards at substantially 90° to the flat portion of the semi-circular section and into engagement with the inner circumference of the circular arc.

By fabricating the shaft 14 in two hollow sections 36, 38, and preferably from folded plates, the tensioner will be substantially lighter and cheaper to manufacture than conventional tensioners having a solid shaft with a machined slot for the strap. The unique shaft structure in accordance with the invention does not cause any weakness in the shaft, and it has practically the same strength, material strength, stableness of shape etc, provided by a solid shaft.

It will be clearly understood that the illustrated and described embodiment is merely one example of how to realise the invention, and it may be altered and modified within the scope of the following claims.

4

0246210

CLAIMS

1.  Device in belt tensioners of the type having a holder member (10) with a fastening for one end (22) of a strap to be tensioned, the holder member being mounted for rotation on a shaft (14) about which the other end (34) of the strap is reeled for tensioning the strap, e.g. round a load, the tensioner also having an operating member (12), which is similarly rotatable about the shaft (14), while also being arranged such as to cause the shaft to accompany it in its rotating movement relative the holder member (10) in a direction tensioning the strap, characterized in that the shaft (14) is fabricated from two circle sector – shaped halves (36, 38) in spaced relationship such as to form a slot (32) in which a strap end (34) may be inserted.

2.  Device as claimed in claim 1, characterized in that the shaft halves (36, 38) are produced as hollow sections.

3.  Device as claimed in claim 1 or 2, characterized in that the halves (36, 38) are produced from plates folded to the desired circle sector shape.

4.  Device as claimed in 3, characterized in that both longitudinal edge portions on each plate are folded inwards into engagement against the inner circumference of the circle sector.

5.  Device as claimed in any one of claims 1 – 4, characterized in that the shaft halves (36, 38) are kept in position by correspondingly formed openings in the ratchet wheels (30) disposed at each end of the shaft (14).

Fig.1

Fig. 2

Fig. 3

Fig. 4